## Europäisches Patentamt
## European Patent Office
## Office européen des brevets

(19)

(11) Veröffentlichungsnummer: **0 004 618**
**B1**

(12)

# EUROPÄISCHE PATENTSCHRIFT

(45) Veröffentlichungstag der Patentschrift:
**14.11.84**

(51) Int. Cl.³: **C 08 G 18/14,** C 08 K 5/29,
C 08 L 75/04

(21) Anmeldenummer: **79100894.9**

(22) Anmeldetag: **24.03.79**

(54) **Verfahren zur Herstellung von schwerentflammbaren, Cyansäurederivate als Flammschutzmittel enthaltenden Polyurethan-Weichschaumstoffen.**

(30) Priorität: **11.04.78 DE 2815554**

(43) Veröffentlichungstag der Anmeldung:
**17.10.79 Patentblatt 79/21**

(45) Bekanntmachung des Hinweises auf die Patenterteilung:
**14.11.84 Patentblatt 84/46**

(84) Benannte Vertragsstaaten:
**BE CH DE FR GB IT NL SE**

(56) Entgegenhaltungen:
**DE - A - 2 043 917**
**DE - A - 2 348 838**
**DE - A - 2 514 209**
**FR - A - 1 541 226**
**FR - A - 2 003 124**
**US - A - 3 965 052**

(73) Patentinhaber: **BASF Aktiengesellschaft,**
**Carl-Bosch-Strasse 38, D-6700 Ludwigshafen (DE)**

(72) Erfinder: **Jarre, Wolfgang, Dr.,** Limesstrasse 3,
**D-6700 Ludwigshafen (DE)**
Erfinder: **Mueller, Gerhard, Dr.,** Benderstrasse 29,
**D-8000 München 60 (DE)**
Erfinder: **Zipp, Otmar, Dr.,** Zum Rott 21,
**D-4500 Osnabrück (DE)**
Erfinder: **Ropte, Eckhard, Dr.,** Blumenmorgen 16a,
**D-4590 Osnabrück (DE)**

ACTORUM AG

**Beschreibung**

Die Erfindung betrifft ein Verfahren zur Herstellung von schwerentflammbaren Polyurethan-Weichschaumstoffen, wobei als Polyisocyanat eine Mischung aus Diphenylmethan-diisocyanaten und Polyphenyl-polymethylen-polyisocyanaten mit einem Gehalt an Diphenylmethan-diisocyanat-Isomeren von 40 bis 90 Gew.%, bezogen auf das Gesamtgewicht, und als Flammschutzmittel Cyansäurederivate, insbesondere Melamin, verwendet werden.

Die Herstellung von Polyurethan-Weichschaumstoffen ist bekannt. Hierzu werden üblicherweise als Polyisocyanate Toluylen-diisocyanate bzw. die handelsüblichen Gemische aus 2,4- und 2,6-Toluylen-diisocyanat verwendet. Nachteilig hierbei ist, dass Toluylen-diisocyanate aufgrund ihres hohen Dampfdruckes relativ stark toxisch sind und deshalb bei der Verarbeitung besondere Vorsichtsmassnahmen getroffen und beachtet werden müssen.

Zur Verminderung der Toxizität und Erhöhung der Reaktivität wurde vorgeschlagen, anstelle von Toluylen-diisocyanaten Mischungen aus Toluylen-diisocyanaten und eines Gemisches homologer Polyaryl-polyalkylen-polyisocyanate zur Herstellung von Polyurethankunststoffen, einschliesslich Schaumstoffen zu verwenden.

Flexible Polyurethanschaumstoffe werden ferner nach Angaben der GB-PS 874 430 durch Umsetzung von Polyätherpolyolen mit mindestens 2 Hydroxylgruppen und einer Polyisocyanatmischung aus Diarylmethan-diisocyanaten und 5 bis 50 Gew.% eines Polyisocyanats mit einer Funktionalität grösser als 2 in Gegenwart von Wasser hergestellt. Zur Herstellung von Integralschaumstoffen sind gemäss DE-OS 2 425 657 Diphenylmethan-diisocyanatmischungen geeignet, die eine durchschnittliche Isocyanatfunktionalität von weniger als 2,4 aufweisen und nicht mehr als 60 Gew.% 4,4'-Diphenylmethan-diisocyanat enthalten, wobei mindestens 15 Gew.% des Gehalts an Diphenylmethan-diisocyanatisomeren aus 2,4'-Diphenylmethan-diisocyanat bestehen.

Alle diese Polyurethanschaumstoffe weisen jedoch einen Nachteil auf, der ihre Verwendungsmöglichkeit für zahlreiche Anwendungsgebiete verbietet. Dies ist ihre ungenügende Flammbeständigkeit, insbesonders ihre leichte Entflammbarkeit. Zur Verminderung dieses Nachteils wurden den schaumfähigen Polyurethanmischungen deshalb Flammschutzmittel, insbesondere halogen- und/oder phosphorhaltige Verbindungen, einverleibt. Der Zusatz dieser Produkte wirkte sich jedoch vielfach negativ auf die mechanischen Eigenschaften der erhaltenen Polyurethanschaumstoffe aus. Nachteilig ist ferner, dass im Brandfall toxische und korrodierend wirkende Abgase gebildet werden können. Trotz zahlreicher Versuche und grosser Anstrengungen gelang es bisher nicht Polyurethan-Weichschaumstoffe herzustellen, die nach DIN 4102 als schwerentflammbar bezeichnet werden können.

Aufgabe der vorliegenden Erfindung war es, schwerentflammbare Polyurethan-Weichschaumstoffe auf Basis nicht toxischer oder zumindest wenig toxischer Ausgangsstoffe herzustellen.

Diese Aufgabe wurde gelöst durch das im Anspruch 1 beschriebene Verfahren.

Überraschenderweise wurde festgestellt, dass durch die Auswahl der erfindungsgemäss eingesetzten Polyisocyanatmischung und speziellen Flammschutzmittel aus der Vielzahl der bekannten und handelsüblichen Polyisocyanate und Flammschutzmittel in Kombination mit Wasser oder Mischungen aus Wasser und niedrigsiedenden gegebenenfalls halogenhaltigen Kohlenwasserstoffen oder Dimethyläther als Treibmittel Polyurethan-Weichschaumstoffe erhalten werden, die nach DIN 4102 schwerentflammbar sind.

Zur Herstellung der schwerentflammbaren Polyurethan-Weichschaumstoffe werden als organische Polyisocyanate Mischungen aus Diphenylmethan-diisocyanaten und Polyphenyl-polymethylen-polyisocyanaten mit einem Gehalt an Diphenylmethan-diisocyanat-Isomeren von 40 bis 90 Gew.%, vorzugsweise von 45 bis 65 Gew.%, bezogen auf das Gesamtgewicht der Mischung, verwendet. Hierbei ist im wesentlichen unerheblich, in welchen Mengenverhältnissen die isomeren 4,4'-, 2,4'- und 2,2'-Diphenylmethan-diisocyanate zueinander in der Mischung vorliegen. Erfindungswesentlich ist in erster Linie, dass der Gesamtgehalt an Diphenylmethan-diisocyanatisomeren in der Mischung den obengenannten Konzentrationsbedingungen entspricht. Vorzugsweise verwendet werden jedoch solche Mischungen, die einen Gehalt an 2,4'-Diphenylmethan-diisocyanat kleiner als 10 Gew.%, insbesonders kleiner als 3 Gew.%, bezogen auf das Gewicht an Diphenylmethan-diisocyanat-Isomeren, aufweisen. Anstelle der reinen Polyisocyanatmischungen können auch solche verwendet werden, die zur Verringerung der Kristallisationsneigung mit geringen Mengen eines Alkylendiols oder Polyoxyalkylendiols, beispielsweise Propylenglykolen, Diäthylenglykol und Butylenglykol modifiziert sind. Die Herstellung derartiger, gegebenenfalls urethanmodifizierter Polyisocyanatmischungen mit dem entsprechenden Gehalt an Diphenylmethan-diisocyanatisomeren wird beispielsweise in den deutschen Offenlegungsschriften 2 425 658, 2 513 793 und 2 513 796 beschrieben. Nicht Gegenstand des vorliegenden Patents sind solche Ausführungsformen, die durch die Verfahren zur Herstellung von Polyurethan-Weichschaumstoffen nach den europäischen Patenten Anmeldenummern 79 100 893.1 und 79 100 903.8 geschützt werden.

Als Polyole kommen im wesentlichen lineare, d.h. difunktionelle Polyesterole und insbesonders Polyätherole mit Molekulargewichten von 2000 bis 4500 in Betracht. Geeignete Polyesterole können beispielsweise aus Dicarbonsäuren, vorzugsweise aliphatischen Dicarbonsäuren, mit 2 bis 12 vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, cycloaliphatische Dicarbonsäuren, wie 1,3- und 1,4-Cyclohexandicarbonsäure und aromatische Dicarbonsäuren, wie Phthalsäure und Terephthalsäure. Beispiele für zwei- und mehrwertige, insbesondere dreiwertige Alkohole sind: Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Sofern zur Herstellung der im wesentlichen linearen Polyesterole mehrwertige, insbesondere dreiwertige, Alkohole mitverwendet werden, muss deren Gehalt so berechnet werden, dass die Funktionalität der erhaltenen Polyesterole maximal 2,8 ist.

Vorzugsweise als Polyole verwendet werden jedoch im wesentlichen lineare Polyätherole, die nach bekannten Verfahren aus einem oder mehreren Alkylenoxiden mit 2 bis 4 Kohlenstoffatomen im Alkylenrest und einem Startermolekül, das 2 bis 3, vorzugsweise 2 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernsteinsäure, Adipinsäure, Phthalsäure und Terephthalsäure, N,N'-dialkylsubstituierte Diamine mit 1 bis 4 Kohlenstoffatomen im Alkylrest, wie dialkylsubstituiertes Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan sowie N-Alkyl-diäthanolamine und vorzugsweise mehrwertige, insbesondere zweiwertige Alkohole, wie Äthylenglykol, Propylenglykol, Diäthylenglykol, Dipropylenglykol, Butylenglykol-1,4, Hexamethylenglykol-1,6, Glycerin und Trimethylolpropan.

Bevorzugt verwendet werden im wesentlichen lineare Polyätherole mit Molekulargewichten von 2000 bis 4500 und Hydroxylzahlen von 25 bis 80, die sowohl Äthylenoxid- als auch 1,2-Propylenoxideinheiten in der Oxyalkylenkette enthalten, wobei diese entweder statistisch oder blockweise in der Oxyalkylenkette angeordnet sein können. Insbesondere eingesetzt werden solche Polyätherole, die primäre Hydroxylengruppen aufweisen.

Zur Herstellung von Polyurethan-Weichschaumstoffen mit besonderen mechanischen Eigenschaften kann es gegebenenfalls zweckmässig sein, neben Polyolen zusätzlich difunktionele Kettenverlängerungsmittel mitzuverwenden. Als Kettenverlängerungsmittel kommen insbesondere aliphatische Diole mit 2 bis 6 Kohlenstoffatomen, wie Äthylenglykol, 1,4-Butylenglykol und 1,6-Hexamethylenglykol und aromatisch-aliphatische Diole wie Di-(β-Hydroxyäthyl)-hydrochinon in Betracht.

Ein wesentliches Merkmal der Erfindung basiert auf der Kombination der besonders ausgewählten Mischung aus Diphenylmethan-diisocyanaten und Polyphenyl-polymethylen-polyisocyanaten mit einem Gehalt an Diphenylmethan-diisocyanat-Isomeren von 40 bis 90 Gew.% und der Flammschutzmittel auf der Grundlage von Cyansäurederivaten.

Als Cyansäurederivate im Sinne der Erfindung sind hierbei nicht nur Cyansäurederivate im engeren Sinn zu verstehen, sondern auch Verbindungen, die aus Cyansäure oder Isocyansäure hergestellt werden können und zu Kohlensäure- und Cyanursäurederivaten gehören. Im einzelnen genannt seien beispielsweise Cyansäurederivate im Sinne der Erfindung, wie Cyanamid, Dicyanamid, Guanidin, insbesondere Guanidinsalze, ausgenommen Guanidincarbonat, Biguanid und Cyanursäure und deren Derivate, wie Cyanursäurealkylester mit 1 bis 10 Kohlenstoffatomen im Alkylrest und Cyanursäurehydrazide und -amide, wie Melamin und dessen Kondensationsprodukt mit 1 bis 6 Mol Formaldehyd pro Mol Melamin. Besonders bewährt und daher vorzugsweise zur Anwendung kommen die Handelsprodukte Dicyanamid und insbesonders Melamin. Die Cyansäurederivate werden der schaumfähigen Polyurethanmischung in Mengen von 10 bis 70 Gew.%, vorzugsweise von 20 bis 50 Gew.%, bezogen auf das Gewicht der Mischung aus Diphenylmethan-diisocyanaten und Polyphenyl-polymethylen-polyisocyanaten, einverleibt.

Ein anderes Merkmal des erfindungsgemässen Verfahrens ist die Verwendung von Wasser, das mit dem Isocyanatgemisch reagiert und Kohlendioxid liefert, als Treibmittel. Vorzugsweise werden 2 bis 5 Gew.%, insbesondere 2,5 bis 3,5 Gew.% Wasser, bezogen auf das Gewicht des Polyols verwendet. Anstelle von Wasser allein können auch Mischungen aus Wasser und chemisch inerten, niedrigsiedenden, gegebenenfalls halogenierten Kohlenwasserstoffen als Treibmittel angewandt werden. In Betracht kommen beispielsweise gegebenenfalls halogenierte Kohlenwasserstoffe mit Siedepunkten unter 50°C, vorzugsweise zwischen −50 und 30°C bei Atmosphärendruck. Im einzelnen seien beispielhaft genannt halogenierte Kohlenwasserstoffe, wie Monochlordifluormethan, Dichlormonofluormethan, Dichlordifluormethan und Trichlorfluormethan und deren Gemische und Kohlenwasserstoffe wie Propan, n-Butan und Isobutan sowie Dimethyläther. Geeignete Mischungen aus Wasser und gegebenenfalls halogenierten Kohlenwasserstoffen bestehen im allgemeinen aus 5 bis 70 Gew.%, vorzugsweise 10 bis 50 Gew.% Wasser und 30 bis 95 Gew.%, vorzugsweise 50 bis 90 Gew.%, gegebenenfalls halogenierten Kohlenwasserstoffen, wobei die Gew.% bezogen sind auf das Gesamtgewicht der Treibmittelmischung. Die erforderlichen Mengen an Treibmittelmischung lassen sich auf einfache Weise in Abhängigkeit vom Mischungsverhältnis Wasser zu gegebenenfalls halogeniertem Treibmittel sowie der gewünschten Schaumstoffdichte experimentell ermitteln und betragen ungefähr 2 bis 40, vorzugsweise 5 bis 25 Gew.%, bezogen auf das Polyolgewicht.

Dem schaumfähigen Reaktionsgemisch können ferner Katalysatoren, die die Polyurethanbildung beschleunigen und gegebenenfalls Zusatzstoffe, wie sie üblicherweise zur Herstellung von Polyurethan-Weichschaumstoffen Anwendung finden, einverleibt werden. In Betracht kommen beispielsweise oberflächenaktive Stoffe, Porenregler, Antioxidationsmittel, Hydrolysenschutzmittel, Farbstoffe, Füllstoffe und andere Zusätze.

Geeignete Katalysatoren zur Beschleunigung der Umsetzung zwischen den Polyolen, dem Wasser, gegebenenfalls Kettenverlängerungsmitteln und der erfindungsgemässen Polyisocyanatmischung sind beispielsweise tertiäre Amine, wie Dimethylbenzylamin, N,N,N'N'-Tetramethyl-diamino-äthyläther, Bis-(dimethylaminopropyl)-harnstoff, N-Methyl- bzw. N-Äthylmorpholin, Dimethylpiperazin, 1,2-Dimethylimidazol, 1-Azo-bicyclo-(3,3,0)-octan und vorzugsweise Triäthylendiamin, Metallsalze, wie Zinn-dioctoat, Bleioctoat, Zinn-diäthylhexoat und vorzugsweise Zinn-(II)salze und Dibutylzinndilaurat sowie insbesondere Mischungen aus tertiären Aminen und organischen Zinnsalzen. Vorzugsweise verwendet werden 0,5 bis 5 Gew.% Katalysator auf Basis tertiärer Amine und/oder 0,01 bis 2,5 Gew.% Metallsalze, bezogen auf das Polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyisocyanatmischung angewandt werden.

Nähere Angaben über die obengenannten anderen üblichen Zusatzstoffe sind der Fachliteratur, beispielsweise der Monographie von J.H. Saunders und K.C. Frisch «High Polymers» Band XVI, Polyurethanes, Teil 1 und 2, Verlag Interscience Publishers 1962 bzw. 1964, zu entnehmen.

Die erfindungsgemässen Polyurethan-Weichschaumstoffe können nach dem Präpolymer- und vorzugsweise nach dem one shot-Verfahren hergestellt werden.

Erfolgt die Herstellung der Polyurethan-Weichschaumstoffe nach dem one shot-Verfahren, so wird üblicherweise eine Mischung aus Polyol, Cyansäurederivat, Wasser, Katalysator und gegebenenfalls Kettenverlängerungsmittel und Zusatzstoffen mit der erfindungsgemäss verwendbaren Polyisocyanatmischung bei Temperaturen von 15 bis 60°C, vorzugsweise von 25 bis 40°C in solchen Mengen zur Umsetzung gebracht, dass das Verhältnis von Hydroxylgruppen der Polyole und gegebenenfalls Kettenverlängerungsmittel zu NCO-Gruppen der Polyisocyanatmischung 0,1 bis 0,4 : 1, vorzugsweise 0,15 bis 0,3 : 1 beträgt und das Verhältnis sämtlicher Zerewitinoff aktiver Wasserstoffatome – gebunden an Polyol, gegebenenfalls Kettenverlängerungsmittel und Wasser – zu NCO-Gruppe oder Polyisocyanatmischung ungefähr 0,7 bis 1,3 : 1, vorzugsweise 0,9 bis 1,1 : 1 ist. Sofern die Flammschutzmittel reaktive NH-Gruppen besitzen, sind diese in den genannten Mengenverhältnissen nicht berücksichtigt. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Als besonders zweckmässig hat es sich jedoch erwiesen, nach dem Zweikomponenten-Verfahren zu arbeiten und die Mischung aus Polyol, Cyansäurederivat, Wasser, Katalysator, gegebenenfalls Kettenverlängerungsmittel und Zusatzstoffe zu der Komponente A zu vereinigen und als Komponente B die erfindungsgemässe Polyisocyanatmischung zu verwenden.

Zur Herstellung der NCO-Gruppen haltigen Präpolymeren wird die erfindungsgemäss verwendbare Polyisocyanatmischung mit den bereits genannten Polyolen und/oder Kettenverlängerungsmitteln in solchen Mengen zur Umsetzung gebracht, dass das Verhältnis von NCO-Gruppen zu Gesamthydroxyl 10 : 1 bis 95 : 1, vorzugsweise 70 : 1 bis 90 : 1 beträgt. Die erhaltenen Präpolymeren werden anschliessend mit Cyansäurederivaten, Wasser oder Mischungen aus Wasser und niedrigsiedenden, gegebenenfalls halogenierten Kohlenwasserstoffen und gegebenenfalls zusätzlichen Polyolen und/oder Kettenverlängerungsmitteln und Zusatzstoffen gemischt und aufschäumen gelassen.

Die erfindungsgemäss hergestellten Polyurethan-Weichschaumstoffe sind schwerentflammbar nach DIN 4102 und eignen sich für die an sich bekannten Anwendungsbereiche für Weichschaumstoffe, insbesondere jedoch als Schallisolationsmaterial für den Bausektor.

Die in den Beispielen genannten Teile beziehen sich auf das Gewicht.

Beispiel 1

Zur Herstellung des Polyurethan-Weichschaumstoffes wird eine Mischung aus

700 g eines difunktionellen Polyätherols auf Basis Äthylenoxid-Propylenoxid mit einer OH-Zahl von 28,
22,4 g Wasser
2,8 g Aminkatalysator (Handelsprodukt ®Niax A1 der Union Carbide Corp.)
1,4 g Triäthylendiamin
5,8 g Schaumstabilisator auf Polysiloxan-Polyoxyalkylen-polymerisatbasis (Handelsprodukt ®Tegostab B 4690 der Goldschmidt AG, Essen)
105 g Trichlorfluormethan und
240 g Melamin

bei Raumtemperatur mit

430 g einer urethanmodifizierten Mischung aus Diphenylmethandiisocyanaten und

Polyphenyl-polymethylen-polyisocyanaten mit einem Gehalt an Diphenylmethan-diisocyanaten von 65 Gew.%, einer Viskosität von 140 cps und einem Isocyanatgehalt von 28,6% zur Reaktion gebracht.

Der erhaltene Polyurethan-Weichschaumstoff besitzt folgende mechanische Kenndaten:

| | |
|---|---|
| Raumgewicht: | 53 (g/l) |
| Zugfestigkeit: | 0,103 (N/mm²) |
| Stauchhärte: | |
| bei 20% | 0,42 (N/mm²) |
| bei 40% | 0,65 (N/mm²) |
| bei 60% | 1,32 (N/mm²) |
| Weiterreissfestigkeit: | 0,6 (N/mm) |
| Brandverhalten (Brandschacht-Test): | |
| nach DIN 4102: | B 1 |
| freihängend: | 4 cm Stärke |
| aufgeklebt: | 1 und 4 cm Stärke |
| Schallabsorptionsvermögen: | siehe Abb. |

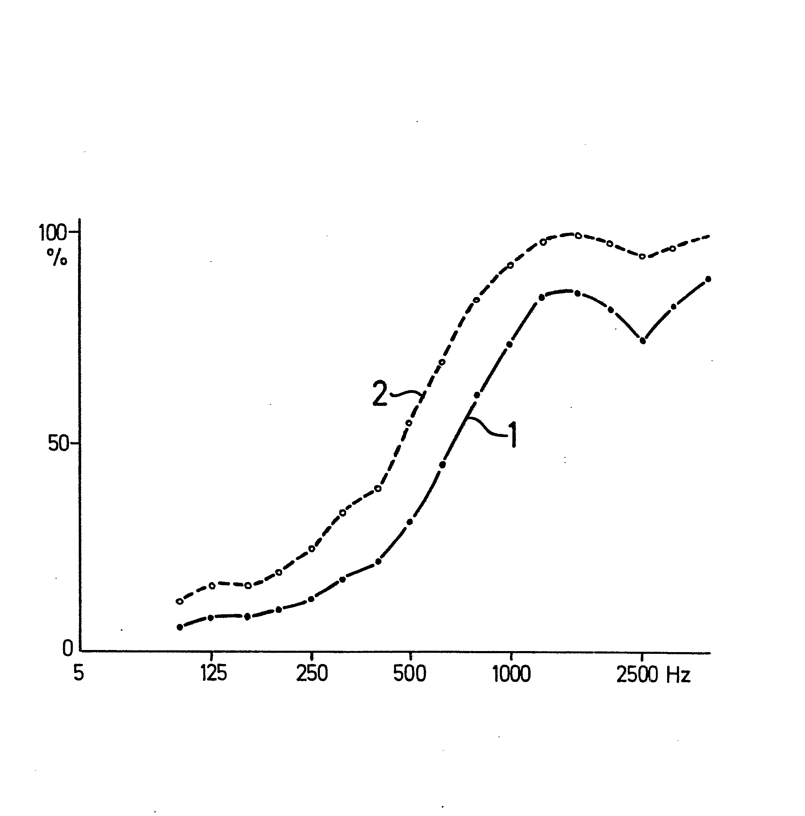

Der Schallabsorptionsgrad wurde gemessen nach DIN 52 215-63.
Rohr: Länge $L_1$ = 1000 mm; $L_2$ = 280 mm
Querschnitt D = 99 mm²; D = 29 mm².
In der Abbildung bedeutet:
Kurve 1: Schallabsorptionsgrade bei senkrechtem Schalleinfall.
Kurve 2: Schallabsorptionsgrade auf statistischen Schalleinfall umgerechnet.

Vergleichsbeispiel A

Zur Herstellung eines konventionellen Polyurethan-Weichschaumstoffes werden 700 g einer Mischung aus

92 g eines trifunktionellen Polyätherols auf Basis Äthylenoxid-Propylenoxid mit der OH-Zahl 35,
3 g Wasser
6 g eines tetrafunktionellen Polyätherols auf Basis eines aliphatischen Diamins und Propylenoxid mit einer OH-Zahl 480
0,2 g Dimethylcyclohexylamin
0,7 g Triäthylendiamin
0,2 g eines Schaumstabilisators auf Polysiloxan - Polyoxyalkylenpolymerisatbasis (Handelsprodukt Tegostab B 4113 der Goldschmidt AG, Essen)
0,5 g N-Äthylmorpholin und
0,7 g Butandiol-1,4
bei Raumtemperatur mit
302 g einer Mischung aus 2,4- und 2,6-Toluylendiisocyanaten im Gewichtsverhältnis 80 : 20
zur Reaktion gebracht.

Der erhaltene Polyurethan-Weichschaumstoff, der eine Dichte von 50 g/l besitzt, brennt beim Brandschacht-Test gemäss DIN 4102 völlig ab.

Beispiele 2–7

Einer Mischung aus
600 Teilen Polyol
16,2 Teilen Wasser
1,2 Teilen Aminkatalysator (Handelsprodukt ®Desmorapid PV der Bayer AG)
1,2 Teilen Bis(β-(N,N-dimethylamino)-alkyl)-äther
1,2 Teilen Triäthylendiamin
8,4 Teilen Schaumstabilisator (®Tegostab B 4690) und
90 Teilen Fluortrichlormethan
werden 15 Gew.% Melamin, bezogen auf das Gesamtgewicht der schaumfähigen Mischung, einverleibt und das Gemisch bei Raumtemperatur intensiv mit einer urethanmodifizierten Mischung aus Diphenylmethan-diisocyanaten und Polyphenyl-polymethylen-polyisocyanaten (Roh-MDI) mit einem Diphenylmethan-diisocyanatgehalt von 50 bis 55 Gew.% vermischt und aufschäumen gelassen.

Als Polyole wurden verwendet:
Polyol A:
aktiviertes Polyätherol auf Basis Dipropylenglykol, Propylenoxid, Äthylenoxid mit einer OH-Zahl von 28;
Polyol B:
aktiviertes Polyätherol auf Basis Glycerin, Propylenoxid, Äthylenoxid mit einer OH-Zahl von 35;
Polyol C:
aktiviertes Blockpolyätherol auf Basis Glycerin, Äthylenoxid, Propylenoxid mit einer OH-Zahl von 27;
Polyol D:
aktiviertes Polyätherol auf Basis Äthylendiamin, Propylenoxid, Äthylenoxid mit einer OH-Zahl von 60;
Polyol E:
Polyesterol mit einer OH-Zahl von 56 Handelsprodukt ®Desmophen 2001 der Bayer AG;
Polyol F:
Polyesterol mit einer OH-Zahl von 60 Handelsprodukt ®Elastophen 2804 der Elastogran GmbH, Lemförde;

Zur Prüfung der Entflammbarkeit wurde auf eine Schaumstoffprobe der Grösse 15 × 15 × 2 cm 1 ml Methanol mit einer Spritze so aufgetragen, dass eine benetzte Fläche von 2 cm Durchmesser an der Schaumstoffunterseite entstand. Die so vorbehandelte Probe wurde in einer geschützten Kammer auf einen Drahtrost mit einem Gitterabstand von 0,5 cm gelegt und an der mit Methanol benetzten Stelle entzündet.

Zur Beurteilung der Entflammbarkeit wurde der Durchmesser des entstandenen Brandloches, seine Flammweiterleitung und die Gew.% des verbrannten Schaumstoffes bestimmt.

Die erhaltenen Ergebnisse sind in Tabelle I zusammengefasst.

Beispiele 8–10

Man verfährt analog den Angaben des Beispiels 2, verwendet jedoch anstelle von Melamin die in Tabelle II genannten Cyanursäurederivate.

Beispiel 10

Man verfährt analog den Angaben des Beispiels 2, verwendet jedoch als Polyisocyanat 280,9 Teile eines handelsüblichen Roh-MDI mit einem Diphenylmethan-diisocyanat-Gehalt von 40–45 Gew.%.

Tabelle I

| Beispiel | Polyol | | Isocyanat-mischung (Teile) | Gew.% verbrann-ter Schaumstoff | Durchmesser des Brandloches (cm) | Bemerkungen |
|---|---|---|---|---|---|---|
| 2 | Polyol | A | 295,8 | 3,5 | 4,8 | schwer ent-flammbar |
| 3 | Polyol | B | 306,6 | 3,6 | 5 | schwer ent-flammbar |
| 4 | Polyol | C | 295,8 | 6,5 | 6,5 | schwer ent-flammbar |
| 5 | Polyol | D | 344,4 | 3,9 | 4,6 | schwer ent-flammbar |
| 6 | Polyol | E | 338,4 | 12,7 | 9,8 | schwer ent-flammbar |
| 7 | Polyol | F | 344,4 | 12,5 | 9,0 | schwer ent-flammbar |

Tabelle II

| Bei-spiel | Cyansäure-derivate | Gew.% verbrannter Schaumstoff | Durchmesser des Brand-loches (cm) |
|---|---|---|---|
| 8 | Cyanamid | 8,3 | 6,1 |
| 9 | Cyanguanidin | 5,3 | 5,4 |

Beispiel 11
    Eine Mischung aus
300    Teilen eines aktivierten Polyätherols auf Basis Dipropylenglykol, Propylenoxid und Äthylenoxid mit einer OH-Zahl von 28 (Polyol A)
    6    Teilen Wasser
    0,6 Teilen Desmorapid PV
    0,6 Teilen Bis(β-(N,N-dimethylamino)-alkyl)-äther
    0,6 Teilen Triäthylendiamin
    8,4 Teilen Tegostab B 4690
    35    Teilen Monofluortrichlormethan und
    81,6 Teilen Melamin
werden bei Raumtemperatur intensiv mit 119,9 Teilen eines urethanmodifizierten Roh-MDI-Gemisches mit einem Diphenylmethan-diisocyanatgehalt von 60 bis 65 Gew.% vermischt und die Reaktionsmischung aufschäumen gelassen.

Beispiel 12
    Man verfährt analog den Angaben von Beispiel 11, verwendet jedoch anstelle von 6 Teilen 13,5 Teile Wasser, anstelle von 8,4 Teilen 4,2 Teile Tegostab B 4690 und anstelle von 119,9 Teilen 242,3 Teile des urethanmodifizierten Roh-MDI-Gemisches.

Vergleichsbeispiel B
    Eine Mischung aus
300    Teilen Polyol A
    16,2 Teilen Wasser
    0,6 Teilen Desmorapid PV
    0,6 Teilen Bis(-β-(N,N-dimethylamino)-alkyl)-äther
    0,6 Teilen Triäthylendiamin
    4,2 Teilen Tegostab B 4690 und
    45    Teilen Fluortrichlormethan
werden bei Raumtemperatur mit 181,4 Teilen einer handelsüblichen 2,4- und 2,6-Toluylendiisocyanat im Gewichtsverhältnis 80 : 20 vermischt und die erhaltene Mischung aufschäumen gelassen.

Vergleichsbeispiel C
    Man verfährt analog den Angaben des Vergleichsbeispiels B, fügt der schaumfähigen Reaktionsmischung jedoch 71,5 Teile Melamin hinzu.

Vergleichsbeispiel D
    Man verfährt analog den Angaben des Beispiels 11, jedoch ohne Zusatz von Melamin.
    Die bei Prüfung der Entflammbarkeit erhaltenen Ergebnisse der Beispiele 11 bis 13 und Vergleichsbeispiele B bis D sind in Tabelle III zusammengefasst.

Tabelle III

| Beispiel/ Ver-gleichs-beispiel | Gew.% verbrann-ter Schaumstoff | Durchmesser des Brand-loches (cm) | Bemerkungen |
|---|---|---|---|
| 11 | 12,5 | 7,6 | schwer entflammbar |
| 12 | 8,3 | 6,6 | schwer entflammbar |
| 13 | 5,3 | 5,2 | schwer entflammbar |
| B | 100% | — | Schaumstoff |
| C | 100% | — | entflammt und |
| D | 100% | — | brennt völlig ab |

## Patentansprüche

1. Verfahren zur Herstellung von schwerentflammbaren Polyurethan-Weichschaumstoffen durch Umsetzung von aromatischen Polyisocyanaten, Polyolen, Flammschutzmitteln und Treibmitteln sowie gegebenenfalls Kettenverlängerungsmitteln und Zusatzstoffen, dadurch gekennzeichnet, dass man als aromatische Polyisocyanate eine Mischung aus Diphenylmethan-diisocyanaten und Polyphenyl-polymethylen-polyisocyanaten mit einem Gehalt an Diphenylmethan-diisocyanaten von 40 bis 90 Gew.%, bezogen auf das Gesamtgewicht, als Polyole Polyesterole mit einer Funktionalität von 2 bis 2,8 und einer Hydroxylzahl von 24,9 bis 78,54 oder Polyetherole aus einem oder mehreren Alkylenoxiden mit 2 bis 4 Kohlenstoffatomen im Alkylenrest mit einer Funktionalität von 2 bis 3 und einer Hydroxylzahl von 24,9 bis 84,15 als Flammschutzmittel Cyansäurederivate, ausgenommen Guanidincarbonat gemäss DE-A-2 514 209, und als Treibmittel Wasser verwendet und die Verhältnisse von Hydroxylgruppen der Polyole und gegebenenfalls Kettenverlängerungsmittel zu NCO-Gruppen der Polyisocyanatmischung 0,1 bis 0,4 : 1 und sämtlicher Zerewitinoff-aktiver Wasserstoffatome, gebunden an Polyole, gegebenenfalls Kettenverlängerungsmittel und Wasser, zu NCO-Gruppe der Polyisocyanatmischung ungefähr 0,7 bis 1,3 : 1 betragen.

2. Verfahren gemäss Anspruch 1, dadurch gekennzeichnet, dass die Mischung aus Diphenylmethan-diisocyanaten und Polyphenyl-polymethylen-polyisocyanaten einen Gehalt an Diphenylmethan-diisocyanaten von 45 bis 65 Gew.%, bezogen auf das Gesamtgewicht, besitzen.

3. Verfahren gemäss Anspruch 1 und 2, dadurch gekennzeichnet, dass die Mischung aus Diphenylmethan-diisocyanaten und Polyphenyl-polymethylen-polyisocyanaten einen Gehalt an 2,4'-Diphenylmethan-diisocyanat kleiner als 3 Gew.%, bezogen auf das Gewicht der Diphenylmethan-diisocyanat-Isomeren, aufweist.

4. Verfahren gemäss Anspruch 1, dadurch gekennzeichnet, dass als Cyansäurederivate Cyanamid, Dicyanamid, Guanidin, Biguanid, Cyanursäurealkylester, Cyanursäurehydrazide und Cyanursäureamide verwendet werden.

5. Verfahren gemäss Anspruch 4, dadurch gekennzeichnet, dass als Cyanursäureamid Melamin verwendet wird.

6. Verfahren gemäss Anspruch 5, dadurch gekennzeichnet, dass das Melamin in einer Menge von 10 bis 70 Gew.%, bezogen auf die Polyisocyanatmenge, verwendet wird.

7. Verfahren gemäss Anspruch 1, dadurch gekennzeichnet, dass Wasser in einer Menge von 2 bis 5 Gew.%, bezogen auf die verwendete Polyolmenge, als Treibmittel verwendet wird.

8. Verfahren gemäss Anspruch 7, dadurch gekennzeichnet, dass das Wasser in Form einer Mischung mit üblichen Treibmitteln aus der Gruppe niedrigsiedender Kohlenwasserstoffe, Ether und/oder niedrigsiedender Halogenkohlenwasserstoffe verwendet wird.

## Claims

1. A process for the manufacture of flame-resistant flexible polyurethane foams by reacting aromatic polyisocyanates, polyols, flame retardants and blowing agents as well as optional chain extenders and additives, wherein a mixture of diphenylmethane diisocyanates and polyphenylene polymethylene polyisocyanates, the content of diphenylmethane diisocyanates being from 40 to 90% by weight, based on the total weight, is used as aromatic polyisocyanate; polyester polyols having a functionality of from 2 to 2.8 and a hydroxyl number of from 24.9 to 78.54, or polyether polyols obtained from one or more alkylene oxides with from 2 to 4 carbon atoms in the alkylene radical, and having a functionality of from 2 to 3 and a hydroxyl number of from 24.9 to 84.15 are used as polyols; a cyanic acid derivative, excluding guanidine carbonate according to German Laid-Open Application DOS 2 514 209, is used as flame retardant; and water is used as blowing agent, the ratio of hydroxyl groups of the polyols and optional chain extenders to NCO groups of the polyisocyanate mixture being from 0.1 to 0.4 : 1, and the ratio of all hydrogen atoms capable of undergoing a Zerewitinoff reaction, which are bonded to polyols, any chain extenders used and water, to the NCO group of the polyisocyanate mixture being from about 0.7 to 1.3 : 1.

2. A process as claimed in claim 1, wherein the mixture of diphenylmethane diisocyanates and polyphenylene polymethylene polyisocyanates contains 45 to 65 percent by weight, based on the total weight, of diphenylmethane diisocyanates.

3. A process as claimed in claims 1 and 2, wherein the mixture of diphenylmethane diisocyanates and polyphenylene polymethylene polyisocyanates contains less than 3 percent by weight, based on the weight of the diphenylmethane diisocyanate isomers, of 2,4'-diphenylmethane diisocyanate.

4. A process as claimed in claim 1, wherein cyanamide, dicyandiamide, guanidine, biguanidine, a cyanuric alkyl ester, a cyanuric hydrazide or a cyanuric amide is used as cyanic acid derivative.

5. A process as claimed in claim 4, wherein melamine is used as cyanuric acid amide.

6. A process as claimed in claim 5, wherein melamine is used in a quantity of 10 to 70 percent by weight, based on the amount of polyisocyanate.

7. A process as claimed in claim 1, wherein water, in a quantity of 2 to 5 percent by weight, based on the amount of polyol used, is used as blowing agent.

8. A process as claimed in claim 7, wherein water is used in the form of a mixture with conventional blowing agents selected from the group consisting of low-boiling hydrocarbons, ethers and/or low-boiling halogenated hydrocarbons.

**Revendications**

1. Procédé de préparation de mousses souples ignifuges en polyuréthannes par réaction de polyisocyanates aromatiques, de polyols, d'ignifugeants et de substances porogènes, ainsi qu'éventuellement d'agents d'allongement des chaînes et d'autres additifs, caractérisé en ce que l'on emploie comme polyisocyanates aromatiques un mélange de diisocyanates de diphényl-méthane et de polyisocyanates de polyphényl-polyméthylène avec une proportion de diisocyanates de diphénylméthane de 40 à 90% du poids total, comme polyols des polyesterols avec une fonctionnalité de 2 à 2,8 et un indice d'hydroxyle de 24,9 à 78,54 ou des polyétherols dérivés d'un ou de plusieurs oxydes d'alkylène à groupe alkylène en $C_2$ à $C_4$ avec une fonctionnalité de 2 à 3 et un indice d'hydroxyle de 24,9 à 84,15, comme ignifugeants des dérivés de l'acide cyanique, à l'exception du carbonate de guanidine selon le brevet DE-A-2 514 209, et comme substance porogène de l'eau, le rapport entre les groupes hydroxyle des polyols et éventuellement de l'agent d'allongement des chaînes et les groupes –NCO du mélange de polyisocyanates étant compris entre 0,1 : 1 et 0,4 : 1 et le rapport entre tous les atomes d'hydrogène actifs selon Zerewitinoff, liés aux polyols, éventuellement à l'agent d'allongement des chaînes, et de l'eau et les groupes –NCO du mélange de polyisocyanates entre environ 0,7 : 1 et 1,3 : 1.

2. Procédé suivant la revendication 1, caractérisé en ce que le mélange de diisocyanates de diphényl-méthane et de polyisocyanates de polyphényl-polyméthylène possède une teneur en diisocyanates de diphényl-méthane de 45 à 65% du poids total.

3. Procédé suivant la revendication 1 ou la revendication 2, caractérisé en ce que le mélange de diisocyanates de diphényl-méthane et de polyisocyanates de polyphényl-polyméthylène possède une teneur en diisocyanate de 2,4'-diphénylméthane inférieure à 3% du poids des isomères du diisocyanate de diphényl-méthane.

4. Procédé suivant la revendication 1, caractérisé en ce que les dérivés de l'acide cyanique sont choisis parmi le cyanamide, le dicyanamide, la guanidine, la guanyl-guanidine, les cyanurates d'alkyle et les hydrazides et amides de l'acide cyanurique.

5. Procédé suivant la revendication 4, caractérisé en ce que l'amide de l'acide cyanurique utilisé est la mélamine.

6. Procédé suivant la revendication 5, caractérisé en ce que la mélamine est utilisée en une proportion de 10 à 70% du poids des polyisocyanates.

7. Procédé suivant la revendication 1, caractérisé en ce que l'eau est utilisée comme substance porogène à raison de 2 à 5% en poids par rapport au(x) polyol(s).

8. Procédé suivant la revendication 7, caractérisé en ce que l'eau est employée sous forme d'un mélange avec des substances porogènes usuelles du groupe des éthers et des hydrocarbures et(ou) hydrocarbures halogénés à bas point d'ébullition.